# EUROPÄISCHE PATENTSCHRIFT

(11) **EP 1 450 431 B1**
(45) Veröffentlichungstag und Bekanntmachung des Hinweises auf die Patenterteilung: **30.08.2006**
(21) Anmeldenummer: 03024814.0
(22) Anmeldetag: 30.10.2003
(51) Int. Cl.: H01M 8/24

(54) **Brennstoffzellenanordnung**
Fuel cell assembly
Assemblage de piles à combustible

(30) Priorität: 01.11.2002 US 287208
(43) Veröffentlichungstag der Anmeldung: 25.08.2004
(73) Patentinhaber: DEERE & COMPANY, Moline, Illinois 61265-8098 (US)
(72) Erfinder: Vuk, Carl Thomas, Denver, IA 50670 (US); Forest, Richard Lee, Colona, IL 61241 (US)
(74) Vertreter: Holst, Sönke

(56) Entgegenhaltungen:
- EP-A- 0 585 049
- WO-A-01/41234
- CA-A- 2 316 504
- US-A- 4 623 596

## Beschreibung

Die Erfindung betrifft eine Brennstoffzellenanordnung.

Es ist denkbar, dass in Zukunft Brennstoffzellen in Fahrzeugen Verwendung finden. Beispielsweise könnten Brennstoffzellen dazu verwendet werden, als zusätzliche Energiequellen eingesetzt zu werden, welche beispielsweise als Energieversorgung für die Beleuchtung, die Elektronik, einen elektrischen Antrieb und/oder elektrisch angetriebene, an ein solches Fahrzeug adaptierbare Arbeitsgeräte dienen könnten. Wieviel von der Energie, welche von der Brennstoffzelle zur Verfügung gestellt wird, benötigt wird, variiert in Abhängigkeit von den von einem Bediener ausgewählten Optionen und der Benutzung des Fahrzeugs.

Der vorliegenden Erfindung liegt die Aufgabe zugrunde, eine Brennstoffzellenanordnung anzugeben und weiterzubilden, mit welcher insbesondere eine variable Leistung zur Verfügung gestellt werden kann.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst eine Brennstoffzellenanordnung der eingangs genannten Art eine Basisanordnung, eine erste Gruppe von Brennstoffzellen und mindestens eine zweite Gruppe von Brennstoffzellen. Die Basisanordnung weist eine erste Zone einer ersten Charakteristik zum Verbinden mit einer Brennstoffzelle und mindestens eine zweite Zone einer zweiten Charakteristik zum Verbinden mit einer Brennstoffzelle auf, wobei die erste Charakteristik sich von der zweiten Charakteristik unterscheidet. Jede Zone umfasst Einlassanschlüsse und Auslassanschlüsse für Kühlmittel, Brennstoff und Luft. Die Basisanordnung weist eine Vielzahl von Kanälen auf, welche mit den Einlassanschlüssen und den Auslassanschlüssen in Verbindung stehen. Die Brennstoffzellen der ersten Gruppe von Brennstoffzellen sind miteinander verbunden, um einen ersten Brennstoffzellenstapel zu bilden, welcher ein erstes elektrisches Leistungsvermögen aufweist und welcher ausgebildet ist, um mit der ersten Zone der Basisanordnung und mit den Einlassanschlüssen und den Auslassanschlüssen für Kühlmittel, Brennstoff und Luft der ersten Zone operativ verbindbar zu sein. Die Brennstoffzellen der zweiten Gruppe von Brennstoffzellen sind miteinander verbunden, um einen zweiten Brennstoffzellenstapel zu bilden, welcher ein zweites, von dem ersten elektrischen Leistungsvermögen unterschiedliches elektrisches Leistungsvermögen aufweist. Der zweite Brennstoffzellenstapel ist ausgebildet, um mit der zweiten Zone der Basisanordnung und mit den Einlassanschlüssen und den Auslassanschlüssen für Kühlmittel, Brennstoff und Luft der zweiten Zone operativ verbindbar zu sein. Die erste Zone ist in charakteristischer Weise derart ausgebildet, dass nur ein die erste elektrische Leistungsfähigkeit aufweisender Brennstoffzellenstapel mit der ersten Zone verbindbar ist. Die zweite Zone ist in charakteristischer Weise derart ausgebildet, dass nur ein die zweite elektrische Leistungsfähigkeit aufweisender Brennstoffzellenstapel mit der zweiten Zone verbindbar ist.

Mit anderen Worten wird in erfindungsgemäßer Weise eine Brennstoffzellenanordnung zur Verfügung gestellt, an welche mehrere Brennstoffzellenstapel unterschiedlicher elektrischer Leistungsfähigkeit adaptierbar sind. Durch Aktivierung eines einzelnen Brennstoffzellenstapels oder mehrerer Brennstoffzellenstapel gleichzeitig kann die Brennstoffzellenanordnung derart betrieben werden, dass insgesamt eine variable Leistungsfähigkeit zur Verfügung gestellt werden kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: eine Seitenansicht eines Ausführungsbeispiels der vorliegenden Erfindung einer Brennstoffzellenanordnung,
- Fig. 2: eine Ansicht entlang den Linien 2-2 aus Figur 1,
- Fig. 3: eine Ansicht entlang den Linien 3-3 aus Figur 1,
- Fig. 4: eine Ansicht entlang den Linien 4-4 aus Fig. 2,
- Fig. 5: in einer perspektivischen Ansicht ein Ausführungsbeispiel eines Brennstoffzellenmoduls, welches auf eine Basisanordnung montiert ist,
- Fig. 6: in einer perspektivischen Ansicht ein Ausführungsbeispiel einer Block-Off-Platte, welche auf einer Basisanordnung montiert ist,
- Fig. 7: in einer Schnittansicht einen Ausschnitt eines ersten Ausführungsbeispiels einer Verbindung zwischen einem Brennstoffzellenmodul und der Basisanordnung,
- Fig. 8: in einer Schnittansicht einen Ausschnitt eines weiteren Ausführungsbeispiels einer Verbindung zwischen einem Brennstoffzellenmodul und der Basisanordnung in einem nicht verbundenen Zustand,
- Fig. 9: in einer perspektivischen Ansicht einen Teil eines Verschlussstopfens der Verbindung aus Fig. 8 und
- Fig. 10: in einer Schnittansicht einen Ausschnitt einer Verbindung aus Fig. 8 im verbundenen Zustand.

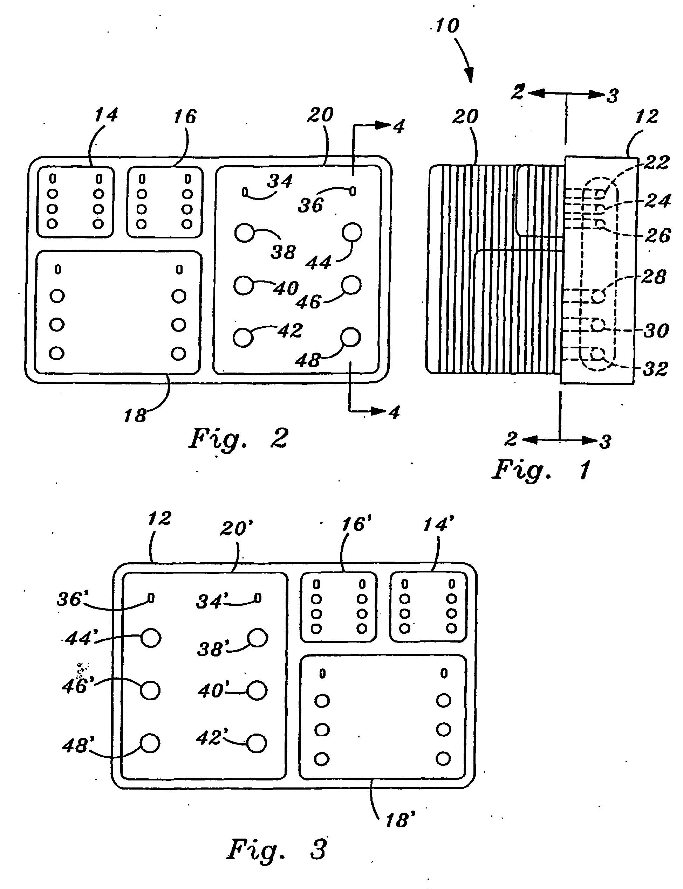

Fig. 1 und 2 zeigen eine Brennstoffzellenanordnung 10, welche eine Basisanordnung 12 aufweist. Die Basisanordnung 12 könnte aus einem massiven Metallmaterial hergestellt sein, beispielsweise aus Aluminium, wobei auch Plastik oder Polymermaterialien die mechanischen Anforderungen an das Material erfüllen könnten. An einer Seite der Basisanordnung 12 ist eine Vielzahl von Brennstoffzellenstapeln 14, 16, 18 und 20 anbringbar. Jeder Brennstoffzellenstapel 14, 16, 18, 20 umfasst eine Vielzahl von herkömmlich erhältlichen Brennstoffzellen 19, welche in herkömmlicher Art und Weise aneinander befestigt werden können, um einen Brennstoffzellenstapel zu bilden. Jeder Brennstoffzellenstapel hat vorzugsweise ein unterschiedliches Leistungsvermögen bzw. einer unterschiedliche Kapazität und eine unterschiedliche Charakteristik, beispielsweise eine Basisfläche oder eine der Basisanordnung 10 zugewandte Projektionsfläche. So weisen beispielsweise die Brennstoffzellenstapel 14 und 16 eine Leistung von 1 kW, der Brennstoffzellenstapel 18 eine Leistung von 5 kW und der Brennstoffzellenstapel 20 eine Leistung von 10 kW auf. Fig. 1 ist entnehmbar, dass die Basisanordnung 12 einzelne darin ausgebildete Kanäle aufweist, um den Wasserstoff als Brennstoff, Luft und Kühlmittel in die Brennstoffzellenstapel hinein und aus den Brennstoffzellenstapeln herauszuleiten. Die Kanäle umfassen die Wasserstoffeinlässe 22 und 28, die Kühlmitteleinlässe 20 und 34 und die Luftauslässe 26 und 32.

Fig. 2 ist entnehmbar, dass der Brennstoffzellenstapel 20 einen positiven elektrischen Anschluss bzw. eine Klemme 34, einen negativen elektrischen Anschluss bzw. eine Klemme 36, einen Wasserstoffeinlass 38, einen Kühlmitteleinlass 40, einen Luftauslass 42, einen Lufteinlass 44, einen Kühlmittelauslass 46 und einen Wasserstoffauslass 48 aufweist. Die Brennstoffzellenstapel 14, 16 und 18 weisen ähnliche Komponenten in ähnlichen Anordnungen auf, jedoch weisen die Brennstoffzellenstapel ein unterschiedliches Leistungsvermögen und unterschiedliche Abstände zwischen ihren Schnittstellen bzw. Klemm, Einlässen und Auslässen auf.

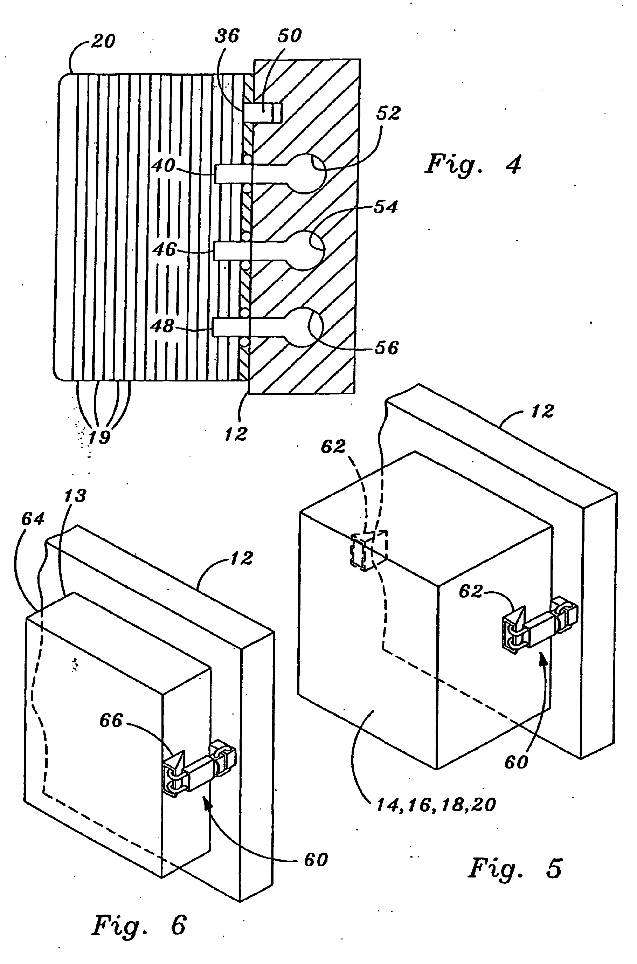

Fig. 3 ist entnehmbar, dass die Basisanordnung 12 eine Vielzahl von Zonen 14', 16', 18' und 20' aufweist, welche den Brennstoffzellenstapeln 14, 16, 18 und 20 korrespondieren. Die Zonen 14', 16', 18' und 20' weisen vorzugsweise unterschiedliche Charakteristiken auf, welche den unterschiedlichen Charakteristiken der Brennstoffzellenstapel 14, 16, 18 und 20 entsprechen. Beispielsweise können die Zonen 14' und 16' eine kleinere Basisfläche oder einen kleineren "Footprint" aufweisen, welche(r) zu einer kleineren Leistung der Brennstoffzellenstapel korrespondiert. Die Zone 18' könnte eine im mittleren Bereich liegende Basisfläche aufweisen, welche zu einem mittleren Leistungsbereich eines entsprechenden Brennstoffzellenstapels korrespondiert. Die Zone 20 könnte eine große Basisfläche aufweisen, welche zu einem großen Leistungsvermögen eines Brennstoffzellenstapels korrespondiert. In jeder Zone ist der Abstand bzw. ist die Trennung der elektrischen Verbindungen, der Einlass- und Auslassanschlüsse größer oder kleiner, abhängig von den Abmessungen der entsprechenden Zone. Die Basisanordnungszone 20' umfasst einen positiven elektrischen Anschluss bzw. eine Klemme 34', einen negativen elektrischen Anschluss bzw. eine Klemme 36', einen Wasserstoffauslass 38', einen Kühlmittelauslass 40', einen Lufteinlass 42', einen Luftauslass 44', einen Kühlmitteleinlass 46'und einen Wasserstoffeinlass 48'.

Fig. 4 ist eine Schnittansicht, welche - ausgehend von Figur 2 - von der rechten Seite aus gesehen die Verbindungen zwischen dem Brennstoffzellenstapel 20 und der Basisanordnung 12 zeigt.

Der elektrische Anschluss 36 für den negativen Pol ist mit einem in der Basisanordnung 12 angeordneten Leiter 50 für den negativen Pol verbunden. Der Lufteinlassanschluss 44 ist mit einem in der Basisanordnung 12 angeordneten Luftzufuhrkanal 52 verbunden. Der Kühlmittelauslassanschluss 46 ist mit einem in der Basisanordnung 12 vorgesehenen Kühlmittelkanal 54 verbunden. Der Wasserstoffauslassanschluss 48 ist mit einem in der Basisanordnung 12 vorgesehenen Wasserstoffkanal 56 verbunden.

Fig. 5 ist entnehmbar, dass ein Brennstoffzellenstapel 14, 16, 18 oder 20 Mithilfe eines Paars von Federklemmen 60, welche an gegenüberliegenden Seiten des Brennstoffzellenstapels angeordnet sind, auf die Basisanordnung 12 geklemmt sind. Jede Federklemme 60 steht in lösbarem Eingriff mit einem eine Ausnehmung aufweisenden Vorsprung 62, welcher an der Seite des Brennstoffzellenstapels angeordnet ist.

Fig. 6 ist entnehmbar, dass ein Plattenblock 64 auf die Basisanordnung 12 anstelle eines oder mehrerer Brennstoffzellenstapel(s) 14, 16, 18 oder 20 geklemmt werden kann. Jeder Plattenblock 64 umfasst ein Paar von Vorsprüngen 66, welche eine Ausnehmung aufweisen, welche mit einem Paar von Federklemmen 60 in Eingriff stehen.

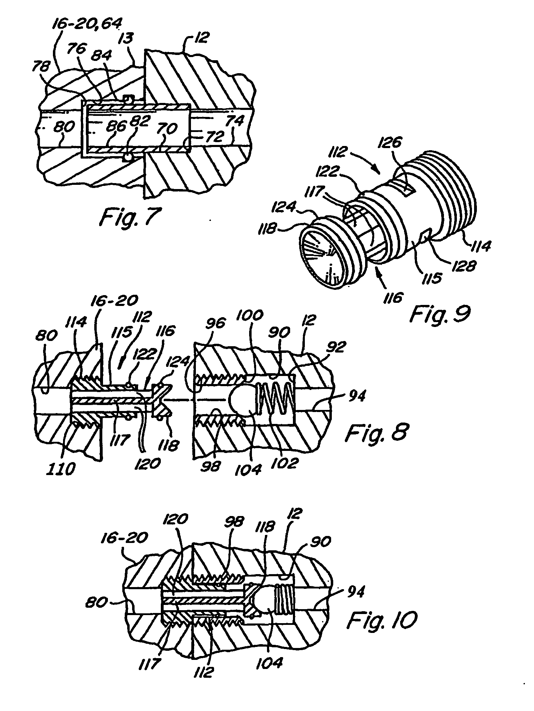

Fig. 7 zeigt eine Verbindung zwischen der Basisanordnung 12 und einem Brennstoffzellenstapel 16 bis 20 oder einem Plattenblock 64. Eine Bohrung 70 erstreckt sich in die Basisanordnung 12 und bildet eine ringförmige Schulter 72 zwischen der Bohrung 70 und einem Kanal 74 mit einem kleineren Durchmesser. Eine Bohrung 76 erstreckt sich in den Brennstoffzellenstapel 16 bis 20 und bildet eine ringförmige Schulter 78 zwischen der Bohrung 76 und einem Kanal 80 mit einem kleineren Durchmesser. Die Bohrung 76 ist im Fall eines Plattenblocks 64 in Form eines Sacklochs ausgeführt und es ist kein Kanal 80 vorgesehen. Eine O-Ring-Dichtung 82 ist in einer ringförmigen Rille oder Nut 84 angebracht, welche in der Wand der Bohrung 76 ausgebildet ist. Ein zylindrisches Rohr 86 umfasst ein Ende, welches dichtend von der Bohrung 70 aufgenommen wird, beispielsweise in Form einer Presspassung, und welches an der Schulter 72 zur Anlage kommt. Das andere Ende des Rohrs 86 wird lösbar von der Bohrung 76 aufgenommen und kommt dichtend mit der O-Ring-Dichtung 82 zur Anlage. Eine solche Verbindung könnte für jeden der Anschlüsse 38 bis 48 verwendet werden.

Den Fig. 8 bis 10 ist eine alternative Verbindung zwischen der Basisanordnung 12 und den Brennstoffzellenstapeln 16 bis 20 entnehmbar. Hierbei handelt es sich um selbstverschließende Verbindungen zwischen unterschiedlichen Basisanordnungsanschlüssen, wodurch das Vorsehen eines Plattenblocks 64 entfallen kann. Gemäß Fig. 8 erstreckt sich eine Bohrung 90 in die Basisanordnung 12 und bildet zwischen der Bohrung 90 und dem Kanal 94 mit einem kleineren Durchmesser eine ringförmige Schulter 92. Der äußere Abschnitt 96 der Bohrung 90 bildet ein Gewinde. Ein Absperrventilsitzteil 98 ist in den mit einem Gewinde versehenen äußeren Teil 96 der Bohrung eingedreht und bildet einen Absperrventilsitz 100. Eine Feder 102 ist in der Bohrung 90 montiert und zwingt einen Absperrventilball 104 zur Anlage an dem Absperrventilsitz 100.

Eine Gewindebohrung 110 erstreckt sich in dem Brennstoffzellenstapel 16 bis 20 und nimmt einen Ventilstößel 112 auf. Wie in den Fig. 8 und 9 gezeigt ist, umfasst der Ventilstößel 112 eine mit einem Gewinde versehene hohle Basis 114, eine zylindrisch ausgebildete hohle Buchse 115, einen zentral angeordneten Schaft bzw. Stiel 116 und ein mit dem Absperrventilball 104 in Eingriff bringbares Bauteil 118, welches an dem äußeren Ende des Stiels 116 angeordnet ist. Der Stiel 116 umfasst vier in axialer und radialer Richtung sich erstreckende Stege 117. Die Basis 114, die Buchse 115 und der Stiel 116 bilden Kanäle 120, welche das Ende des Stiels 116 mit dem Kanal 80 in dem Brennstoffzellenstapel 16 bis 20 kommunizieren. O-Ring-Dichtungen 122 und 124 sind in Nuten entsprechend montiert, welche an der Buchse 115 und an dem Bauteil 118 vorgesehen sind. Wenn der Brennstoffzellenstapel 16 bis 20 von der Basisanordnung 12 beabstandet ist, wird der Absperrventilball 104 gegen den Absperrventilsitz 100 gehalten und der entsprechende Basisanordnungskanal ist gegenüber der äußeren Umgebung abgedichtet. Fig. 9 ist entnehmbar, dass flache Oberflächen 126, 128 an der Peripherie der Buchse 115 vorgesehen sind, so dass der Ventilstößel 112 mit einem in Fig. 9 nicht gezeigten Werkzeug, beispielsweise mit einem Schraubenschlüssel, manipuliert werden kann.

Fig. 10 ist entnehmbar, dass das mit dem Absperrventilball 104 in Eingriff bringbare Bauteil 118 den Absperrventilball 104 von dem Absperrventilsitz 100 wegbewegt, wenn eine der Brennstoffzellenstapel 16 bis 20 an der Basisanordnung 12 angebracht ist, wodurch der Basisanordnungskanal über die Kanäle 120 mit dem entsprechenden Brennstoffzellenstapel 16 bis 20 in Verbindung stehen.

Wenn kein Brennstoffzellenstapel an einer entsprechenden Zone der Basisanordnung 12 angebracht werden soll, kann ein einem Gewinde versehener Stöpsel - in den Figuren nicht gezeigt - in die Anschlüsse der Zone eingeschraubt werden, wodurch die entsprechenden Anschlüsse gegenüber der Umgebung abgedichtet sind.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Brennstoffzellenanordnung, mit einer Basisanordnung (12), mit einer ersten Gruppe von Brennstoffzellen und mit mindestens einer zweiten Gruppe von Brennstoffzellen, wobei die Basisanordnung (12) eine erste Zone (14') einer ersten Charakteristik zum Verbinden mit einer Brennstoffzelle und mindestens eine zweite Zone (18') einer zweiten Charakteristik zum Verbinden mit einer Brennstoffzelle aufweist, wobei die erste Charakteristik sich von der zweiten Charakteristik unterscheidet, wobei jede Zone (14', 18') Einlassanschlüsse und Auslassanschlüsse für Kühlmittel, Brennstoff und Luft aufweist, wobei die Basisanordnung (12) eine Vielzahl von Kanälen (52, 54, 56) aufweist, welche mit den Einlassanschlüssen und den Auslassanschlüssen in Verbindung stehen, wobei die Brennstoffzellen (19) der ersten Gruppe von Brennstoffzellen miteinander verbunden sind, um einen ersten Brennstoffzellenstapel (14) zu bilden, welcher ein erstes elektrisches Leistungsvermögen aufweist und welcher ausgebildet ist, um mit der ersten Zone (14') der Basisanordnung (12) und mit den Einlassanschlüssen und den Auslassanschlüssen für Kühlmittel, Brennstoff und Luft der ersten Zone (14') operativ verbindbar zu sein, wobei die Brennstoffzellen (19) der zweiten Gruppe von Brennstoffzellen miteinander verbunden sind, um einen zweiten Brennstoffzellenstapel (18) zu bilden, welcher ein zweites, von dem ersten elektrischen Leistungsvermögen unterschiedliches elektrisches Leistungsvermögen aufweist, wobei der zweite Brennstoffzellenstapel (18) ausgebildet ist, um mit der zweiten Zone (18') der Basisanordnung (12) und mit den Einlassanschlüssen und den Auslassanschlüssen für Kühlmittel, Brennstoff und Luft der zweiten Zone (18') operativ verbindbar zu sein, wobei die Charakteristik der ersten Zone (14') derart wählbar ist, dass nur ein die erste elektrische Leistungsfähigkeit aufweisender Brennstoffzellenstapel (14) mit der ersten Zone (14') verbindbar ist, und wobei die Charakteristik der zweiten Zone (18') derart wählbar ist, dass nur ein die zweite elektrische Leistungsfähigkeit aufweisender Brennstoffzellenstapel (18) mit der zweiten Zone (18') verbindbar ist.

2. Brennstoffzellenanordnung nach Anspruch 1, wobei die Basisanordnung (12) mindestens eine weitere Zone (20') einer weiteren Charakteristik zum Verbinden mit einer Brennstoffzelle aufweist, wobei die weitere Charakteristik sich von der ersten und der zweiten Charakteristik unterscheidet, wobei die weitere Zone (20') Einlassanschlüsse und Auslassanschlüsse für Kühlmittel, Brennstoff und Luft (38' bis 48') aufweist, wobei die Brennstoffzellen (19) einer weiteren Gruppe von Brennstoffzellen miteinander verbunden sind, um einen weiteren Brennstoffzellenstapel (20) zu bilden, welcher ein weiteres elektrisches Leistungsvermögen aufweist und welcher ausgebildet ist, um mit der weiteren Zone (20') der Basisanordnung (12) und mit den Einlassanschlüssen und den Auslassanschlüssen für Kühlmittel, Brennstoff und Luft der weiteren Zone (20') operativ verbindbar zu sein, und wobei die Charakteristik der weiteren Zone (20') derart wählbar ist, dass nur ein die weitere elektrische Leistungsfähigkeit aufweisender Brennstoffzellenstapel (20) mit der zweiten Zone (20') verbindbar ist.

3. Brennstoffzellenanordnung nach Anspruch 1 oder 2, wobei jeder Brennstoffzellenstapel (14 bis 20) aufweist:
- ein Gehäuse, welches mit einer - vorzugsweise formgepresst ausgebildeten - Basis verbindbar ist, wobei die Basis und das Gehäuse eine Vielzahl von Brennstoffzellen (19) aufweist,
- elektrische Anschlüsse (34, 36), welche an der Basis angebracht sind und welche mit den Brennstoffzellen (19) in elektrischer Verbindung stehen,
- einen in der Basis ausgebildeten Wasserstoffeinlass (38) und einen in der Basis ausgebildeten Wasserstoffauslass (48), welche jeweils zur Beförderung von Wasserstoff für die Brennstoffzellen (19) dienen,
- einen in der Basis ausgebildeten Lufteinlass (44) und einen in der Basis ausgebildeten Luftauslass (42), welche jeweils zur Beförderung von Luft für die Brennstoffzellen (19) dienen,
- einen in der Basis ausgebildeten Kühlmitteleinlass (40) und einen in der Basis ausgebildeten Kühlmittelauslass (46), welche jeweils zur Beförderung von Kühlmittel für die Brennstoffzellen (19) dienen.

4. Brennstoffzellenanordnung nach einem der Ansprüche 1 bis 3, wobei jeder Brennstoffzellenstapel (14 bis 20) ein Gehäuse aufweist, welches mit einer - vorzugsweise formgepresst ausgebildeten - Basis verbindbar ist, wobei die Basis und das Gehäuse eine Vielzahl von Brennstoffzellen (19) aufweist, wobei jeder Brennstoffzellenstapel (14 bis 20) einen Satz von Einlassanschlüssen und Auslassanschlüssen für Kühlmittel, Brennstoff und Luft (38 bis 48) und elektrische Anschlüsse (34, 36) aufweist, wobei der Satz von Einlassanschlüssen und Auslassanschlüssen für Kühlmittel, Brennstoff und Luft (38 bis 48) und elektrischen Anschlüssen (34, 36) für einen ersten Brennstoffzellenstapel (14) eine erste Konfiguration/Charakteristik aufweist, wobei der Satz von Einlassanschlüssen und Auslassanschlüssen für Kühlmittel, Brennstoff und Luft (38 bis 48) und elektrischen Anschlüssen (34, 36) für einen zweiten Brennstoffzellenstapel (14) eine zweite Konfiguration/Charakteristik aufweist, die sich von der ersten Konfiguration/Charakteristik unterscheidet, wobei die elektrischen Anschlüsse (34, 36) an der Basis angebracht sind und mit den Brennstoffzellen (19) in elektrischer Verbindung stehen.

5. Brennstoffzellenanordnung nach einem der Ansprüche 1 bis 4, wobei ein Plattenblock (64) vorgesehen ist, welcher an eine Zone (14' bis 20') der Basisanordnung (12) anordenbar ist, um die Anschlüsse einer Zone im (14' bis 20') gegenüber der Umgebung abzudichten.

6. Brennstoffzellenanordnung nach Anspruch 5, wobei eine Bohrung (70) größeren Durchmessers sich in die Basisanordnung (12) erstreckt und zwischen der Bohrung (70) und einem in der Basisanordnung (12) ausgebildeten Kanal kleineren Durchmessers eine ringförmige Schulter (72) gebildet ist, wobei eine Bohrung (76) sich in den Plattenblock (64) erstreckt, wobei eine O-Ring-Dichtung (82) in einer an der Wand der Bohrung (76) ausgebildeten ringförmigen Nut (84) befestigbar ist, wobei ein im Wesentlichen zylindrisch ausgebildetes Rohr (86) ein Ende aufweist, welches dichtend von der Bohrung (70) aufgenommen und an der ringförmigen Schulter (72) zur Anlage kommt, und wobei das andere Ende des zylindrischen Rohrs (86) lösbar von der Bohrung (76) aufnehmbar und an der O-Ring-Dichtung (82) dichtend zur Anlage bringbar ist.

7. Brennstoffzellenanordnung nach einem der Ansprüche 1 bis 6, wobei mindestens einer der in der Basisanordnung (12) vorgesehenen Anschlüsse eine ein Gewinde aufweisende Bohrung (90) umfasst, welche sich in die Basisanordnung (12) erstreckt und eine ringförmige Schulter gebildet ist, wobei ein hohler Absperrventilsitzteil (98) in den mit einem Gewinde versehenen Abschnitt (96) der Bohrung (90) verschraubbar ist und welcher einen Absperrventilsitz (100) bildet, wobei ein Absperrventilball (104) von der Bohrung (90) aufnehmbar ist, wobei eine Feder (102) in der Bohrung (90) befestigbar ist und welche den Absperrventilball (104) zur Anlage an dem Absperrventilsitz (100) zwingt, um eine Verbindung zwischen dem Anschluss der Basisanordnung (12) und dem Anschluss des Brennstoffzellenstapels (14 bis 20) zu verhindern, wobei ein Ventilstößel (112) in einem Anschluss des Brennstoffzellenstapels (16 bis 20) befestigbar und davon abragend anbringbar ist, und wobei der Ventilstößel (112) mit dem Absperrventilball (104) in Eingriff kommt und den Absperrventilball (104) vom Absperrventilsitz (100) dann wegbewegt, wenn der Brennstoffzellenstapel (16 bis 20) an der Basisanordnung (12) angebracht wird, wodurch eine Verbindung zwischen dem Anschluss der Basisanordnung (12) und dem Anschluss des Brennstoffzellenstapels (16 bis 20) herstellbar ist.

8. Brennstoffzellenanordnung nach Anspruch 7, wobei der Ventilstößel (112) eine hohle Basis (114), eine hohle, von der Basis (114) abragende zylindrische Buchse (115), einen von der Basis (114) und der hohlen Buchse (115) abragenden und zentriert anbringbaren Stiel (116) und ein an dem äußeren Ende des Stiels (116) befestigbaren und mit dem Absperrventilball (104) in Eingriff bringbares Bauteil (118) aufweist, wobei die hohle Basis (114) in einer Bohrung in dem Brennstoffzellenstapel aufnehmbar ist.

9. Brennstoffzellenanordnung nach Anspruch 8, wobei der Stiel (116) eine Vielzahl von sich in axialer und radialer Richtung erstreckende Stegglieder (117) aufweist, welche sich durch die Buchse 115 erstrecken, und wobei die Basis (114), die Buchse (115) und der Stiel (116) Kanäle (120) bilden, welche das Ende des Stiels (116) mit dem Anschluss des Brennstoffzellenstapels verbinden.

10. Brennstoffzellenanordnung nach Anspruch 9, wobei O-Ring-Dichtungen (122, 124) an der Buchse (115) und an dem mit dem Absperrventilball (104) in Eingriff bringbaren Bauteil (118) vorgesehene Nuten befestigbar sind, wobei die O-Ring-Dichtungen (122, 124) an dem Absperrventilsitzteil (98) zur Anlage kommen und eine Verbindung zwischen dem Anschluss der Basisanordnung (12) und der Umgebung verhindern, wenn der Ventilstößel (112) von dem Absperrventilsitzteil (98) aufgenommen wird.

11. Brennstoffzellenanordnung nach einem der Ansprüche 1 bis 10, wobei eine Bohrung (70) größeren Durchmessers sich in die Basisanordnung (12) erstreckt und zwischen der Bohrung (70) und einem Kanal kleineren Durchmessers eine ringförmige Schulter (72) in der Basisanordnung (12) gebildet ist, wobei eine - vorzugsweise in Form eines Sacklochs ausgeführte - Bohrung (76) sich in den Brennstoffzellenstapels (16 bis 20) oder den Plattenblock (64) erstreckt, wobei eine O-Ring-Dichtung (82) in einer an der Wand der Bohrung (76) ausgebildeten ringförmigen Nut (84) befestigbar ist, wobei ein im Wesentlichen zylindrisch ausgebildetes Rohr (86) ein Ende aufweist, welches dichtend von der Bohrung (70) aufgenommen und an der ringförmigen Schulter (72) zur Anlage kommt, und wobei das andere Ende des zylindrischen Rohrs (86) lösbar von der in dem Brennstoffzellenstapel (16 bis 20) vorgesehenen Bohrung (76) aufnehmbar und von der O-Ring-Dichtung (82) dichtend zur Anlage bringbar ist.

12. Brennstoffzellenanordnung nach einem der Ansprüche 1 bis 11, wobei die erste Zone (14') zum Verbinden mit einer Brennstoffzelle eine erste Fläche aufweist, wobei die zweite Zone (18') zum Verbinden mit einer Brennstoffzelle eine zweite Fläche aufweist, und wobei sich die erste Fläche der ersten Zone (14') von der zweiten Fläche der zweiten Zone (18') unterscheidet.

13. Brennstoffzellenanordnung nach einem der Ansprüche 1 bis 12, wobei die erste Zone (14') zum Verbinden mit einer Brennstoffzelle eine erste Anordnung von Einlass- und Auslassanschlüssen aufweist, wobei die zweite Zone (18') zum Verbinden mit einer Brennstoffzelle eine zweite Anordnung von Einlass- und Auslassanschlüssen aufweist, und wobei sich die erste Anordnung von Einlass- und Auslassanschlüssen der ersten Zone (14') von der zweiten Anordnung von Einlass- und Auslassanschlüssen der zweiten Zone (18') unterscheidet.

## Claims

1. A fuel cell assembly with a base assembly (12), a first group of fuel cells and at least one second group of fuel cells, wherein the base assembly (12) comprises a first zone (14') with a first characteristic for connection to a fuel cell and at least one second zone (18') with a second characteristic for connection to a fuel cell, wherein the first characteristic differs from the second characteristic, wherein each zone (14', 18') has inlet and outlet ports for coolant, fuel and air, wherein the base assembly (12) has a plurality of channels (52, 54, 56) which are connected to the inlet ports and the outlet ports, wherein the fuel cells (19) of the first group of fuel cells are connected to one another in order to form a first fuel cell stack (14) which has a first electrical power capacity and which is designed to be capable of operative connection to the first zone (14') of the base assembly (12) and to the inlet ports and the outlet ports for coolant, fuel and air of the first zone (14'), wherein the fuel cells (19) of the second group of fuel cells are connected to one another in order to form a second fuel cell stack (18) which has a second electrical power capacity differing from the first electrical power capacity, wherein the second fuel cell stack (18) is designed to be capable of operative connection to the second zone (18') of the base assembly (12) and to the inlet ports and the outlet ports for coolant, fuel and air of the second zone (18'), wherein the characteristic of the first zone (14') can be so selected that only a fuel cell stack (14) having the first electrical power capacity can be connected to the first zone (14') and wherein the characteristic of the second zone (18') can be so selected that only a fuel cell stack (18) having the second electrical power capacity can be connected to the second zone (18').

2. A fuel cell assembly according to claim 1, wherein the base assembly (12) comprises at least one further zone (20') with a further characteristic for connection to a fuel cell, wherein the further characteristic differs from the first and second characteristics, wherein the further zone (20') comprises inlet ports and outlet ports for coolant, fuel and air (38' to 48'), wherein the fuel cells (19) of a further group of fuel cells are connected together, in order to form a further fuel cell stack (20) which has a further electrical power capacity and which is designed to be capable of operative connection to the further zone (20') of the base assembly (12) and to the inlet ports and the outlet ports for coolant, fuel and air of the further zone (20'), and wherein the characteristic of the further zone (20') can be so selected that only a fuel cell stack (20) having the further electrical power capacity can be connected to the second zone (20').

3. A fuel cell assembly according to claim 1 or 2, wherein each fuel cell stack (14 to 20) comprises:
- a housing which can be connected to a base - preferably of compression moulded form, wherein the base and the housing comprises a plurality of fuel cells (19),
- electrical connections (34, 36) which are fitted on the base and which are electrically connected to the fuel cells (19),
- a hydrogen inlet (38) formed in the base and a hydrogen outlet (48) formed in the base, which each serve for conveying hydrogen for the fuel cells (19),
- an air inlet (44) formed in the base and an air outlet (42) formed in the base, which each serve for conveying air for the fuel cells (19),
- a coolant inlet (40) formed in the base and a coolant outlet (46) formed in the base, which each serve for conveying coolant for the fuel cells (19).

4. A fuel cell assembly according to any of claims 1 to 3, wherein each fuel cell stack (14 to 20) comprises a housing which can be connected to a base - preferably of compression moulded form - wherein the base and the housing comprises a plurality of fuel cells (19), wherein each fuel cell stack (14 to 20) has a set of inlet ports and outlet ports for coolant, fuel and air (38 to 48) and electrical terminals (34, 36), wherein the set of inlet ports and outlet ports for coolant, fuel and air (38 to 48) and electrical terminals (34, 36) for a first fuel cell stack (14) has a first configuration/characteristic, wherein the set of inlet ports and outlet ports for coolant, fuel and air (38 to 48) and electrical terminals (34, 36) for a second fuel cell stack (18) has a second configuration/characteristic which differs from the first configuration/characteristic, wherein the electrical terminals (34, 36) are fitted on the base and are electrically connected to the fuel cells (19).

5. A fuel cell assembly according to any of claims 1 to 4, wherein a blocking plate (64) is provided and can be arranged on a zone (14' to 20') of the base assembly (12), in order to seal the ports of a zone (14' to 20') relative to the surroundings.

6. A fuel cell assembly according to claim 5, wherein a bore (70) of larger diameter extends into the base assembly (12) and an annular shoulder (72) is formed between the bore (70) and a channel of smaller diameter formed in the base assembly (12), wherein a bore (76) extends into the blocking plate (64), wherein an O-ring seal (82) can be fixed in an annular groove (84) formed in the wall of the bore (76), wherein a substantially cylindrically formed tube (86) has one end which is received in sealed manner by the bore (70) and comes into abutment with the annular shoulder (72), and wherein the other end of the cylindrical tube (86) can be received releasably by the bore (76) and can be brought into sealed engagement with the O-ring seal (82).

7. A fuel cell assembly according to any of claims 1 to 6, wherein at least one of the ports provided in the base assembly (12) comprises a bore (90) with a thread, which extends into the base assembly (12) and forms an annular shoulder, wherein a hollow shut-off valve seat part (98) can be screwed into the section (96) of the bore (90) provided with a thread and forms a shut-off valve seat (100), wherein a shut-off valve ball (104) can be received by the bore (90), wherein a spring (102) can be fixed in the bore (90) and biases the shut-off valve ball (104) into abutment with the shut-off valve seat (100), in order to prevent communication between the port of the base assembly (12) and the port of the fuel cell stack (14 to 20), wherein a valve plunger (112) can be fixed in a port of the fuel cell stack (16 to 20) and be mounted so as to project therefrom, and wherein the valve plunger (112) comes into engagement with the shut-off valve ball (104) and then moves the shut-off valve ball (104) away from the shut-off valve seat (100) when the fuel cell stack (16 to 20) is fitted on the base assembly (12), whereby communication can be made between the port of the base assembly (12) and the port of the fuel cell stack (16 to 20).

8. A fuel cell assembly according to claim 7, wherein the valve plunger (112) comprises a hollow base (114), a hollow cylindrical bush (115) projecting from the base (114), a stem (116) which can be mounted projecting from and centred in the base (114) and the hollow bush (115), and a component (118) which can be fixed on the outer end of the stem (116) and can be brought into engagement with the shut-off valve ball (104), wherein the hollow base (114) can be received in a bore in the fuel cell stack.

9. A fuel cell assembly according to claim 7, wherein the stem (116) comprises a plurality of web members (117) extending in the axial and radial direction, which extend through the bush (115) and wherein the base (114), the bush (115) and the stem (116) form channels (120) which connect the end of the stem (116) to the port of the fuel cell stack.

10. A fuel cell assembly according to claim 9, wherein O-ring seals (122, 124) can be fixed in grooves provided in the bush (115) and in the component (118) which can be brought into engagement with the shut-off valve ball (104), wherein the O-ring seals (122, 124) come into engagement with the shut-off valve seat part (98) and prevent communication between the port of the base assembly (12) and the surroundings when the valve plunger (112) is received by the shut-off valve seat part (98).

11. A fuel cell assembly according to any of claims 1 to 10, wherein a bore (70) of greater diameter extends into the base assembly (12) and an annular shoulder (72) is formed in the base assembly (12) between the bore (70) and a channel of smaller diameter, wherein a bore (76) - preferably in the form of a blind bore - extends into the fuel cell stack (16 to 20) or the blocking plate (64), wherein an O-ring seal (82) can be fixed in an annular groove (86) formed in the wall of the bore (76), wherein a tube (86) of substantially cylindrical form has one end which is received in sealed manner in the bore (70) and comes into abutment with the annular shoulder (72) and wherein the other end of the cylindrical tube (86) can be received releasably by the bore (76) provided in the fuel cell stack (16 to 20) and can be brought into sealed engagement by the O-ring seal (82).

12. A fuel cell assembly according to any of claims 1 to 11, wherein the first zone (14') for connection to a fuel cell has a first surface, wherein the second zone (18') for connection to a fuel cell has a second surface and wherein the first surface of the first zone (14') differs from the second surface of the second zone (18').

13. A fuel cell assembly according to any of claims 1 to 12, wherein the first zone (14') for connection to a fuel cell has a first arrangement of inlet and outlet ports, wherein the second zone (18') for connection to a fuel cell has a second arrangement of inlet and outlet ports, and wherein the first arrangement of inlet and outlet ports of the first zone (14') differs from the second arrangement of inlet and outlet ports of the second zone (18').

## Revendications

1. Agencement de cellules de combustible, comportant un agencement de base (12), un premier groupe de cellules de combustible et au moins un deuxième groupe de cellules de combustible, l'agencement de base (12) comportant une première zone (14') avec une première caractéristique pour l'assemblage à une cellule de combustible et au moins une deuxième zone (18') avec une deuxième caractéristique pour l'assemblage à une cellule de combustible, la première caractéristique étant différente de la deuxième caractéristique, chaque zone (14', 18') comportant des raccords d'entrée et des raccords de sortie pour le fluide de refroidissement, le combustible et l'air, l'agencement de base (12) comportant une pluralité de canaux (52, 54, 56), qui communiquent avec les raccords d'entrée et les raccords de sortie, les cellules de combustible (19) du premier groupe de cellules de combustible étant reliées entre elles pour former un premier empilage de cellules de combustible (14), qui possède une première capacité de production électrique et qui est conçu pour pouvoir être relié opérationnellement avec la première zone (14') de l'agencement de base (12) et avec les raccords d'entrée et les raccords de sortie pour le fluide de refroidissement, le combustible et l'air de la première zone (14'), les cellules de combustible (19) du deuxième groupe de cellules de combustible étant reliées entre elles pour former un deuxième empilage de cellules de combustible (18), qui possède une deuxième capacité de production électrique différente de la première capacité de production électrique, le deuxième empilage de cellules de combustible (18) étant conçu pour pouvoir être relié opérationnellement avec la deuxième zone (18') de l'agencement de base (12) et avec les raccords d'entrée et les raccords de sortie pour le fluide de refroidissement, le combustible et l'air de la deuxième zone (18'), la caractéristique de la première zone (14') pouvant être choisie de telle sorte que seul un empilage de cellules de combustible (14) possédant la première capacité de production électrique peut être relié à la première zone (14'), et la caractéristique de la deuxième zone (18') pouvant être choisie de telle sorte que seul un empilage de cellules de combustible (18) possédant la deuxième capacité de production électrique peut être relié à la deuxième zone (18').

2. Agencement de cellules de combustible selon la revendication 1, dans lequel l'agencement de base (12) comporte au moins une zone supplémentaire (20') avec une caractéristique supplémentaire pour l'assemblage à une cellule de combustible, la caractéristique supplémentaire étant différente de la première et de la deuxième caractéristique, dans lequel la zone supplémentaire (20') comporte des raccords d'entrée et des raccords de sortie pour le fluide de refroidissement, le combustible et l'air (38' à 48'), les cellules de combustible (19) d'un groupe supplémentaire de cellules de combustible étant reliées entre elles pour former un empilage supplémentaire de cellules de combustible (20), qui possède une capacité supplémentaire de production électrique et qui est conçu pour pouvoir être relié opérationnellement avec la zone supplémentaire (20') de l'agencement de base (12) et avec les raccords d'entrée et les raccords de sortie pour le fluide de refroidissement, le combustible et l'air de la zone supplémentaire (20'), et la caractéristique de la zone supplémentaire (20') pouvant être choisie de telle sorte que seul un empilage de cellules de combustible (20) possédant la capacité supplémentaire de production électrique peut être relié à la deuxième zone (20').

3. Agencement de cellules de combustible selon la revendication 1 ou 2, dans lequel chaque empilage de cellules de combustible (14 à 20) comporte :
- un carter, qui peut être relié à une base - réalisée de préférence par moulage par compression -, la base et le carter comportant une pluralité de cellules de combustible (19),
- des raccords électriques (34, 36), qui sont montés sur la base et qui sont en liaison électrique avec les cellules de combustible (19),
- une entrée d'hydrogène (38), réalisée dans la base, et une sortie d'hydrogène (48), réalisée dans la base, lesquelles sont destinées chacune à l'acheminement de l'hydrogène pour les cellules de combustible (19),
- une entrée d'air (44), réalisée dans la base, et une sortie d'air (42), réalisée dans la base, lesquelles sont destinées chacune à l'acheminement de l'air pour les cellules de combustible (19),
- une entrée de fluide de refroidissement (40), réalisée dans la base, et une sortie de fluide de refroidissement (46), réalisée dans la base, lesquelles sont destinées chacune à l'acheminement du fluide de refroidissement pour les cellules de combustible (19).

4. Agencement de cellules de combustible selon l'une quelconque des revendications 1 à 3, dans lequel chaque empilage de cellules de combustible (14 à 20) comporte un carter, qui peut être relié à une base - réalisée de préférence par moulage par compression -, la base et le carter comportant une pluralité de cellules de combustible (19), dans lequel chaque empilage de cellules de combustible (14 à 20) comporte un ensemble de raccords d'entrée et de raccords de sortie pour le fluide de refroidissement, le combustible et l'air (38 à 48) et de raccords électriques (34, 36), l'ensemble de raccords d'entrée et de raccords de sortie pour le fluide de refroidissement, le combustible et l'air (38 à 48) et de raccords électriques (34, 36) pour un premier empilage de cellules de combustible (14) possédant une première configuration ou caractéristique, l'ensemble de raccords d'entrée et de raccords de sortie pour le fluide de refroidissement, le combustible et l'air (38 à 48) et de raccords électriques (34, 36) pour un deuxième empilage de cellules de combustible (18) possédant une deuxième configuration ou caractéristique, qui se différencie de la première configuration ou caractéristique, les raccords électriques (34, 36) étant montés sur la base et étant reliés électriquement avec les cellules de combustible (19).

5. Agencement de cellules de combustible selon l'une quelconque des revendications 1 à 4, dans lequel il est prévu un bloc de plaques (64), qui est destiné à être agencé dans une zone (14' à 20') de l'agencement de base (12) pour que les raccords d'une zone (14' à 20') soient rendus étanches par rapport à l'environnement.

6. Agencement de cellules de combustible selon la revendication 5, dans lequel une forure (70) avec un diamètre relativement grand est réalisée dans l'agencement de base (12) et un épaulement (72) annulaire est formé entre la forure (70) et un canal de plus petit diamètre réalisé dans l'agencement de base (12), une forure (76) étant réalisée dans le bloc de plaques (64), un joint torique (82) pouvant être fixé dans une rainure (84) annulaire, réalisée dans la paroi de la forure (76), un tube (86) sensiblement cylindrique comportant une extrémité qui est reçue de manière étanche dans la forure (70) et vient en appui contre l'épaulement (72) annulaire, et l'autre extrémité du tube cylindrique (86) étant reçue de manière amovible dans la forure (76) et pouvant être amenée en appui étanche contre le joint torique (82).

7. Agencement de cellules de combustible selon l'une quelconque des revendications 1 à 6, dans lequel au moins un des raccords prévus dans l'agencement de base (12) comporte une forure (90) taraudée, qui est réalisée dans l'agencement de base (12) et forme un épaulement annulaire, dans lequel une partie pour siège de soupape d'arrêt (98) peut être vissée dans une partie taraudée (96) de la forure (90) et qui forme un siège de soupape d'arrêt (100), une bille de soupape d'arrêt (104) pouvant être reçue dans la forure (90), un ressort (102) pouvant être fixé dans la forure (90) et poussant la bille de soupape d'arrêt (104) en appui contre le siège de soupape d'arrêt (100) pour empêcher une liaison entre le raccord de l'agencement de base (12) et le raccord de l'empilage de cellules de combustible (14 à 20), un poussoir de soupape (112) pouvant être fixé dans un raccord de l'empilage de cellules de combustible (16 à 20) et étant agencé en saillie sur ce dernier, et le poussoir de soupape (112) entrant en prise avec la bille de soupape d'arrêt (104) et écartant la bille de soupape d'arrêt (104) du siège de soupape d'arrêt (100) lorsque l'empilage de cellules de combustible (16 à 20) est monté sur l'agencement de base (12), moyennant quoi une liaison peut être établie entre le raccord de l'agencement de base (12) et le raccord de l'empilage de cellules de combustible (16 à 20).

8. Agencement de cellules de combustible selon la revendication 7, dans lequel le poussoir de soupape (112) comporte une base creuse (114), une douille (115) cylindrique creuse en saillie sur la base (114), une tige (116) pouvant être montée de manière centrée et en saillie sur la base (114) et la douille (115) creuse, et une pièce (118) destinée à être fixée sur l'extrémité extérieure de la tige (116) et à être amenée en prise avec la bille de soupape d'arrêt (104), la base creuse (114) pouvant être reçue dans une forure dans l'empilage de cellules de combustible.

9. Agencement de cellules de combustible selon la revendication 8, dans lequel la tige (116) comporte une pluralité d'organes à nervures (117), qui sont orientés dans le sens axial et radial et qui traversent la douille (115), et dans lequel la base (114), la douille (115) et la tige (116) forment des canaux (120), par lesquels l'extrémité de la tige (116) est reliée au raccord de l'empilage de cellules de combustible.

10. Agencement de cellules de combustible selon la revendication 9, dans lequel des joints toriques (122, 124) peuvent être posés dans des rainures prévues sur la douille (115) et sur la pièce (118) destinée à être amenée en prise avec la bille de soupape d'arrêt (104), les joints toriques (122, 124) venant en appui contre la partie pour siège de soupape d'arrêt (98) et empêchant une liaison entre le raccord de l'agencement de base (12) et l'environnement, lorsque le poussoir de soupape (112) est reçu dans la partie pour siège de soupape d'arrêt (98).

11. Agencement de cellules de combustible selon l'une quelconque des revendications 1 à 10, dans lequel une forure (70) avec un diamètre relativement grand est réalisée dans l'agencement de base (12) et un épaulement (72) annulaire est formé dans l'agencement de base (12) entre la forure (70) et un canal de plus petit diamètre, une forure (76) - de préférence en forme de trou borgne - étant réalisée dans l'empilage de cellules de combustible (16 à 20) ou dans le bloc de plaques (64), un joint torique (82) pouvant être posé dans une rainure (84) annulaire, réalisée dans la paroi de la forure (76), un tube (86) sensiblement cylindrique comportant une extrémité qui est reçue de manière étanche dans la forure (70) et vient en appui contre l'épaulement (72) annulaire, et l'autre extrémité du tube cylindrique (86) étant reçue de manière amovible dans la forure (76) prévue dans l'empilage de cellules de combustible (16 à 20) et pouvant être amenée en appui étanche contre le joint torique (82).

12. Agencement de cellules de combustible selon l'une quelconque des revendications 1 à 11, dans lequel la première zone (14') pour être assemblée à une cellule de combustible comporte une première surface, la deuxième zone (18') pour être assemblée à une cellule de combustible comporte une deuxième surface, et dans lequel la première surface de la première zone (14') se différencie de la deuxième surface de la deuxième zone (18').

13. Agencement de cellules de combustible selon l'une quelconque des revendications 1 à 12, dans lequel la première zone (14') pour être assemblée à une cellule de combustible comporte un premier agencement de raccords d'entrée et de sortie, la deuxième zone (18') pour être assemblée à une cellule de combustible comporte un deuxième agencement de raccords d'entrée et de sortie, et dans lequel le premier agencement de raccords d'entrée et de sortie de la première zone (14') se différencie du deuxième agencement de raccords d'entrée et de sortie de la deuxième zone (18').
